# EUROPEAN PATENT SPECIFICATION

(11) **EP 4 205 833 B1**
(45) Date of publication and mention of the grant of the patent: **08.05.2024**
(21) Application number: 22217207.4
(22) Date of filing: 29.12.2022
(51) Int. Cl.: B01D 53/75, F23G 7/04, F22B 1/18, F23G 5/12, F23J 15/04, B01D 53/14, B01D 53/79, B03C 3/00, C01B 7/07, C02F 1/28, B01D 53/68, B01D 53/77

(54) **METHOD FOR PROCESSING WASTE COMPRISING CHLORINE**
VERFAHREN ZUR VERARBEITUNG VON CHLORHALTIGEM ABFALL
PROCÉDÉ DE TRAITEMENT DE DÉCHETS COMPRENANT DU CHLORE

(30) Priority: 30.12.2021 BE 202106116
(43) Date of publication of application: 05.07.2023
(73) Proprietor: Indaver nv, 9130 Beveren (BE)
(72) Inventor: NELISSEN, Tom, 9130 Beveren (BE); ALDERWEIRELDT, Nick, 9130 Beveren (BE)
(74) Representative: Brantsandpatents bv

(56) References cited:
- EP-A1- 0 619 268
- CN-A- 112 902 196
- US-A- 5 238 665
- US-A- 5 964 921
- US-A1- 2002 114 758
- BRUNNER M: "BETRIEBSERFAHRUNGEN MIT ANLAGEN ZUR EINHALTUNG DER 17. BLMSCHV", VGB KRAFTWERKSTECHNIK, VGB KRAFTWERKSTECHNIK GMBH. ESSEN, DE, vol. 73, no. 7, 1 July 1993 (1993-07-01), pages 619-625, XP000382749, ISSN: 0372-5715

## Description

### TECHNICAL FIELD

The invention relates to a method for processing various waste streams comprising chlorine-comprising waste. In a second aspect, the invention also relates to a device for processing these waste streams.

### PRIOR ART

Waste streams are preferably recycled as much as possible in the same or a lower grade application as raw materials. This is made more difficult, if not impossible, when the waste stream is of poor quality. Most waste streams in society in general, as well as many waste streams in industry, contain chlorine. Conversion of such waste streams to gases at high temperatures above 450°C leads to the presence of chlorine in the produced gases, mainly in the form of hydrogen chloride (HCl) and to a lesser extent as chlorine gas (Cl2)

This causes problems in recovering the heat from those gases, because Cl2 causes corrosion on contact with most metals when the temperature of the metal surface exceeds 420°C.

The waste products are often destroyed by incineration, where very high demands are made on the incineration conditions, because incomplete incineration often precisely the toxic components of the waste, which are the most stable, remain and, in addition, toxic compounds such as dioxins and (chlorinated) dibenzofurans can be formed.

BE 1 020 808 describes a method for generating electrical energy from a chlorine-comprising combustible stream. The process begins with the plasma gasification of the chlorine-comprising combustible stream to generate a hot chlorine-comprising synthesis gas. Electrical energy is produced in a power generator.

NL 840 264 describes a method for the thermal conversion of organic waste. The waste materials are heated together with an excess of hydrogen, propane, butane, pentane or naphtha at a temperature between 800 and 1200°C.

US20020114758 describes a process for production of an acid from a by-product or a chlorinated waste material. The process includes the steps of incinerating the by-product or chlorinated waste materials, recovering a substantially dry hydrogen chloride product stream from the combustion step, and further drying the substantially dry hydrogen chloride product stream by contact with a desiccant, preferably dry sulfuric acid.

US5238665 describes a method for reducing the discharge of contaminated liquid streams in the treatment of hot waste incinerator exhaust gases containing hydrochloric acid gas, fly ash particles, toxic metal oxides and toxic organic compounds. A first step consists of contacting the exhaust gases with an alkaline material.

These known methods use bases and obtain neutralized solutions with high salt concentrations which are difficult to further exploit. Purification methods using water require very large columns, are difficult to adapt to different waste streams that are incinerated and do not meet current strict environmental standards.

These known methods do not completely reuse the processed waste streams, require a high energy input, have a relatively low energy production, can only process solids and/or require high-tech purification. The present invention aims to solve at least some of the above problems or drawbacks. The aim of the invention is to provide a method which eliminates those disadvantages.

### SUMMARY OF THE INVENTION

In a first aspect, the present invention relates to a method according to claim 1. The method allows the treatment of contaminants in used organic solvents with high chlorine concentrations. On the one hand, this method aims to recover energy from the steam produced in order to meet its own energy needs and those of neighboring sites. On the other hand, the method offers the possibility to recover a large part of the chlorine in these liquid hazardous wastes in the form of hydrochloric acid (HCl) and to largely reuse it. The recovery of hydrochloric acid (HCl) from chlorinated solvents from organic waste replaces the production of hydrochloric acid (synthesis of hydrogen chloride from chlorine (Cl2) and dihydrogen (H2) or co-production in the formation of chlorinated organic compounds), which is a very energy-intensive industrial process.

Preferred embodiments of the method are set out in claims 2-10.

In a second aspect, the present invention relates to a device according to claim 11. The device recycles production residues and chlorine residues to recover energy and the chlorine in the form of hydrochloric acid. The device offers a sustainable solution and realizes a circular economy that both protects and respects the environment.

Preferred embodiments of the device are described in dependent claims 12-15.

### DESCRIPTION OF THE FIGURES

Figure 1 shows a schematic representation of the incineration process according to an embodiment of the present invention.
**Fig. 2** shows a schematic overview diagram for cleaning flue gas from the combustion of chlorine-comprising material, according to an embodiment of the invention.

### DEFINITIONS

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising", "consist of", "consisting of", "provided with", "include", "including", "contain", "containing", are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

Activated carbon is an adsorbent product obtained from raw materials rich in carbon (wood, peat, coal, lignite, coke, coconut husk, fruit kernels, etc.). This product is used in an "activated carbon filter."

### DETAILED DESCRIPTION

In a first aspect, the invention relates to a method for processing various liquid chlorine-comprising waste streams, the method comprising the following steps: mixing the different waste streams into a mixture; burning the mixture at 1100-1400°C where combustion gases are released; cooling the combustion gases via a steam boiler to 250-300°C, preferably to 270-290°C; removing particles from the combustion gases in a two-field electrofilter; cooling the combustion gases in an economizer to 180-220°C, preferably to 190-210°C; bringing the flue gases in contact with an absorbent in at least two packed absorption columns; obtaining a hydrochloric acid solution; wherein the absorbent has a pH < 7 throughout the at least two packed columns. In an embodiment, the absorbent has a pH < 6, preferably < 4, throughout the at least two packed columns.

Because the initial pH of the absorbent has a pH < 7 when entering the packed columns, no neutralization occurs. An absorbent with a high hydrochloric acid concentration can thus be obtained.

The purpose of the electrofilter is to be a "sink" of a number of pollutants in the particles, such as salts and metals. These salts and metals prevent a high purity hydrochloric acid solution. Salts and metals are trapped in the electrofilter. This greatly improves the quality of the hydrochloric acid.

The packed absorption columns comprise a packing material with fine apertures. These apertures can clog if dust particles are not removed by the electrofilter. Clogging drastically reduces the performance of the packing material in the packed absorption columns. Because salts and metals are removed from the gas before the gas is used to obtain a hydrochloric acid solution, no complex purification step needs to take place in the liquid phase. The economizer and quench cool the flue gases sufficiently so that the packing material in the packed absorption columns does not melt.

In addition, the removal of particles with the electrofilter increases efficiency in the economizer and the packed absorption columns. Such particles could otherwise clog, for example, packing material in the packed absorption columns. Dust particles removed in the electrofilter cannot settle on the surface of the economizer. As a result, the efficiency of the economizer is higher than if there were no electrofilter in front of it. The additional cooling in the economizer prevents too hot gases from quickly affecting the quality of the packing material.

According to an embodiment, the method for processing different liquid chlorine-comprising waste streams is carried out in separate installations.

According to an embodiment, the following steps continue in this order: mixing the different waste streams into a mixture; burning the mixture at 1100-1400°C where combustion gases are released; cooling the combustion gases via a steam boiler to 250-300°C, preferably to 270-290°C; removing particles from the combustion gases in the two-field electrofilter; cooling the combustion gases in the economizer to 180-220°C, preferably to 190-210°C; bringing the flue gases in contact with an absorbent in the at least two packed absorption columns; obtaining a hydrochloric acid solution; wherein the absorbent has a pH < 7 throughout the at least two packed columns.

According to an embodiment, the mixture has a chlorine content of 60-75 wt% of chlorine, preferably 63-70, more preferably 65-67. In this way a constant process is achieved with a high concentration of chlorine in the flue gas. Most of the chlorine will be released as HCl, preferably more than 80%, more preferably 92-98%. The remaining chlorine will be present as Cl2.

The method offers the possibility of recovering a large part of the chlorine in this liquid hazardous waste in the form of hydrochloric acid (HCl) and reusing at least half of it. The recovery of hydrochloric acid (HCl) from chlorinated solvents from organic waste replaces the production of hydrochloric acid and is interesting both ecologically and economically.

The inventors have found that the process according to the present invention brings the advantage of a higher total energy efficiency, i.e. a higher yield of energy used from the same amount of combustible energy input. While the total yield of the process will not necessarily reach the level of a stand-alone steam and gas plant running on a pure and low chlorine content fuel, it can still reach a higher level than the processes currently known in the art for converting a chlorine-comprising combustible stream.

The process according to the present invention brings the further advantage of being less dependent, preferably not dependent at all, on an external supply of a low chlorine content fuel as a feed to the steam turbine.

Most chlorine-comprising waste streams are referred to as rejected derived fuel. They contain a significant amount of energy, and its recovery as useful energy, such as in electrical energy, is considered the most appropriate way to dispose of these waste streams. The recovery of the energy from waste streams is typically based on the incineration of the waste stream and the generation of pressurized steam using the heat of combustion. The steam is then used to drive a turbine, which then drives an electric power generator.

Heat is then preferably extracted from the combustion zone by evaporating pressurized boiler feed water in steel pipes. Due to the only partial evaporation of the water stream, the temperature of the liquid in the tubes remains at the level of the boiling temperature of water at this specific pressure and remains virtually constant. The temperature of the steel of the tubes, in particular the surface temperatures of the steel tubes, will be slightly higher than the boiling temperature of the water, but can thus be indirectly maintained below a certain critical limit.

The mixture of water and saturated steam in the tubes is fed to a steam drum, wherein the steam is separated from the water and drawn in under pressure control at the steam drum. With the steam drum provided above the combustion zone, the hot water can circulate through loops of tubes, and the difference in density between the water in the downward flowing pipes, also called "the downcomers" and the steam/water mixture in the upward flowing pipes, also called the "risers", wherein they are exposed to the heat of the combustion zone, also called the radiant section of the furnace or firebox, is usually capable of driving rapid circulation through the loops without any need for pumping, so that the evaporation still resides partially at the outlet of the risers and the temperature inside the pipes remains under control. The tubes of the radiant section may comprise membrane walls. These are vertical tubes placed like a web that encloses the firebox. The risers can be used to form the membrane wall, and typically the gap between the pipes is closed with metal strips, welded to the pipes.

The temperature limitations of the construction materials determine the maximum surface temperatures allowed for the risers, or for the metal strips between the tubes of the membrane wall, and thus also the temperature allowed inside the risers or tubes, and thus indirectly the maximum pressure allowed in the steam drum.

A higher steam pressure means a more efficient steam turbine, and therefore a higher overall energy recovery. The pressure in the design of the steam system will therefore usually be set as high as possible, as limited by the prevailing technical and economic constraints. The higher pressures of the steam also require a higher purity of the boiler feed water for the purpose of controlling scale build-up due to salt deposition in the boiling water system. The preparation of the boiler feed water thus becomes increasingly expensive, both in terms of investment costs and operational costs, at higher steam pressures.

According to an embodiment, tube bundles are present in a second section of the steam boiler. Preferably, the temperature of the combustion gases here has already dropped to a temperature lower than 700°C in order to avoid the deposition of dust on these tubes.

Preferably, condensation of water vapor from the flue gases is avoided in the economizer zone of the boiler and the electrofilter. Feed water that is too cold or thermal bridges can cause metal in contact with flue gases to become too cold, allowing water vapor to condense from the flue gases. HCl from the flue gases will easily dissolve in it and cause corrosion.

According to an embodiment, the method comprises a further step in which chlorine present in the combustion gases is absorbed in at least two absorption columns. According to a further embodiment, at least 90% of the chlorine present in the combustion gases is absorbed as HCl in the at least two absorption columns, preferably at least 95%, more preferably at least 99.5% and most preferably at least 99.9%. According to a further embodiment, HCl is purified via an activated carbon filter. According to a further embodiment, after purification over an activated carbon filter, HCl has a concentration of 20-29%.

The electrofilter limits the purification required. The purification step using the activated carbon filter produces a product with an HCl concentration of 20-30 wt% HCl.

Hydrochloric acid is a widely used product largely used in the chemical, petrochemical, metal processing and food industries. HCl is synthesized from chlorine (Cl2) and dihydrogen (H2) or co-produced in the formation of chlorinated organic compounds. These processes are highly energy-intensive, resulting in major improvements in the recovery of HCl from waste streams, both environmentally and economically.

Because the absorption takes place in several steps, a higher removal of chlorine from the flue gases can be achieved. Because the hydrochloric acid obtained passes over an activated carbon filter, a high-quality product is obtained.

According to an embodiment, the combustion gases first pass through an electrofilter before HCl is absorbed via a two-stage absorption. According to a further embodiment, fly ash is extracted from the combustion gases via an electrofilter, preferably a two-field electrofilter.

Because the combustion gases first pass through an electrofilter, metals, salts and dust are removed from the combustion gases. This results in a purer hydrochloric acid solution. According to an embodiment, the velocity of the combustion gases is 0.5 m/s in the electrofilter.

According to an embodiment, the temperature during combustion is between 1100 and 1400°C, preferably 1100-1200°C. In the combustion chamber, the waste is burned mainly to CO₂ and H₂O. High concentrations of chlorine-comprising inorganic components, ash and incompletely burned organic molecules are also present. By using a combustion temperature between 1100 and 1400°C, the emission of dioxins or other harmful substances is strongly avoided.

According to an embodiment, the residence time in the incinerator is 2-10 seconds, preferably 2-5 seconds and more preferably 2-3 seconds. By keeping the residence time short, combustion takes place more efficiently and fewer pollutants are formed.

According to an embodiment, the calorific value of the mixture before combustion is greater than 5 MJ/kg, preferably between 7 and 20 MJ/kg, even more preferably between 9 and 15 MJ/kg. A well-defined feed is therefore necessary, and this is achieved by analyzing the waste streams and conditioning the burner feed according to the analysis results.

If the quality of the fuel during combustion is neither well controlled nor constant, the combustion air supply to the combustion zone cannot be precisely adjusted to always correspond to the energy in the fuel supply, and thus the air-fuel ratio cannot be closely controlled. The combustion therefore typically proceeds with a significant average excess of air, which also means that the combustion temperatures are considerably lower compared to the combustion of conventional fuels. Consequently, the temperature in the combustion chamber is limited, but also tends to vary both in time and in place. The same therefore also applies to the surface temperatures of the steel pipes in which the steam is generated. Because of these variations, a considerable margin of safety must be considered when setting the design pressure of the steam system.

According to a further embodiment, urea is added during the combustion process if the NOx production would be higher than the permitted emission standard. Selective non-catalytic reduction is a chemical process used to remove nitrogen oxides (NOx) from the flue gases produced during a combustion process by injecting a mixture of urea and demineralized water into exhaust gases. It achieves at least a 50% reduction. An even higher reduction (>75%) is technically feasible but requires sophisticated thermography and more injection points to accurately dose the urea. Urea must be injected at a temperature of 950°C to limit ammonia slip. The emission of free ammonia is undesirable because it ends up in the recovered hydrochloric acid.

According to a further embodiment, more steam is generated than waste is burned, expressed in tons/hour. The waste that enters consists mainly of organic chlorinated molecules. After combustion thereof, steam is obtained.

According to an embodiment, 20-40 tons of steam per hour are generated, preferably 20-30 tons per hour. According to an embodiment, 2-10 tons of waste are incinerated per hour, preferably 3-7 tons.

According to an embodiment, 2-10 tons of waste are incinerated per hour, preferably 3-7 tons. According to an embodiment, 10-30 tons of steam per hour are generated, preferably 13-20 tons per hour.

According to an embodiment, part of the liquid leaving an absorption column is sprayed back over at least part of this absorption column. Because part of the liquid leaving each absorption column is sprayed back over at least part of the same column, better chlorine removal from the flue gases is achieved. In addition, the contact time between the absorbent and the flue gases can be increased, resulting in a higher HCl concentration.

Because the combustion gases and aqueous liquid flow in opposite directions through the at least two absorption columns, hydrochloric acid can be taken off with a higher concentration than if they flowed in the same direction. In addition, this makes the extraction more efficient.

In an embodiment, part of the hydrochloric acid solution is burned together with the mixture. Because part of the hydrochloric acid solution is returned to the incinerator, it can be cooled. Salts or metals pass through the electrofilter again and get a 2nd chance to be removed. By returning the hydrochloric acid, a better combustion and purification is obtained.

According to an embodiment, the method comprises a further step wherein the combustion gases, after the at least two absorption columns, pass over an activated carbon filter. Because the combustion gases pass over an active carbon filter after the at least two absorption columns, the combustion gases are further purified. Cl₂ is reduced to HCl, trace organic contaminants adsorb to the filter and HCl can dissolve in the liquid.

According to an embodiment, process water is sprayed over the activated carbon filter. The liquid that leaves the activated carbon filter is partly sent back over the activated carbon filter; another part is pumped back to the incinerator. Chlorine gas does not dissolve in aqueous solutions, but it can be absorbed as hydrochloric acid. The activated carbon helps to convert chlorine gas into hydrochloric acid. The activated carbon also acts as a catalyst to convert chlorine gas into hydrochloric acid.

According to an embodiment, at least part of the liquid leaving the last absorption column is purified through an activated carbon filter. Because at least part of the liquid leaving the last absorption column is purified via an activated carbon filter, hydrochloric acid with a higher purity is obtained. Generally speaking, the applicability of the hydrochloric acid increases as its purity increases.

In a second aspect, the invention relates to a device for processing various liquid chlorine-comprising waste streams, comprising: storage tanks; a furnace capable of receiving various waste streams from the storage tanks; a combustion chamber suitable for the combustion of methane and various waste streams where combustion gases are released; a separator suitable for removing chlorine-comprising components from the combustion gases; characterized in that the separator comprises a quench, at least two absorption columns and an activated carbon filter.

According to an embodiment, methane is used at start-up to heat up the incinerator.

According to an embodiment, the device further comprises an electrofilter where the combustion gases are purified before the combustion gases pass through the separator. Preferably, the electrofilter is a two-field electrofilter. A two-field electrofilter still catches dust if one field were to fail. A three-field electrofilter is not necessary to meet the emission standard for dust in the flue-gas stack. The incinerated waste creates little dust in the system. The purpose of this filter is to provide a removal of dust (including metal chlorides) and thus give the hydrochloric acid a better quality.

According to an embodiment, the device further comprises an activated carbon filter configured to purify the hydrochloric acid solution. According to an embodiment, the device further comprises a steam turbine where electricity is generated.

According to an embodiment, the device comprises storage tanks, a burner which receives methane and various waste streams from the storage tanks, a combustion chamber where methane and various waste streams can be burned where combustion gases are released. According to an embodiment, the device further comprises a separator for chlorine-comprising components from the combustion gases.

The separator will extract HCl from the combustion gases via two-stage absorption. In a quench, an absorbent will further cool down the combustion gases. In the context of pollution scrubbers, "cooling down" means cooling hot exhaust gases with hydrochloric acid sprayers before they enter the actual absorbers. Hot gases (gases above ambient temperature) are often cooled to close to saturation level. If they are not cooled, the hot gas stream can evaporate a large portion of the scrubbing liquid, which has a detrimental effect on the collection efficiency and damages the internal parts of the gas scrubber. In some cases, cooling the gases can be economically advantageous. Cooling the gases reduces the temperature and therefore the volume of the gases, allowing less expensive construction materials and a smaller gas purification vessel and fan to be used. Cooling of the flue gases is necessary to protect the plastic absorbers against too high a temperature. The absorbers are best made of plastic because a steel construction would corrode. In a second stage, a wet absorber at low pH will mainly remove HCl.

In a semi-wet scrubbing system, also referred to as semi-dry, a sorbent is added to the gas in an aqueous solution (e.g. milk of lime) or suspension (e.g. as a slurry). This technique is undesirable because the HCl is neutralized and can no longer be used as an acid.

According to a further embodiment, the device further comprises an electrofilter where the combustion gases are purified before the combustion gases pass through the separator for chlorine-comprising components. According to a further embodiment, the separator for chlorine-comprising components absorbs HCl from the combustion gases.

According to a further embodiment, the device further comprises an activated carbon filter configured to purify the hydrochloric acid solution. According to an embodiment, the device further comprises a steam turbine where electricity is generated.

In an embodiment, the device further comprises a high-pH gas scrubber for the removal of SO₂, HF and other acids present in the combustion gases before they are released to the atmosphere through a flue-gas stack.

According to an embodiment, the cleaning steps are performed in separate devices. According to an embodiment, the following cleaning steps are carried out and preferably in this order and in separate devices:
- mixing the different waste streams into a mixture;
- burning the mixture at 1100-1400°C where combustion gases are released;
- cooling the combustion gases via a steam boiler to 250-300°C;
- removing particles from the combustion gases in a two-field electrofilter;
- cooling the combustion gases in an economizer to 180-220°C;
- cooling and absorbing pollutants in a quench;
- absorbing pollutants in two or more packed columns;
- absorbing pollutants in one or more absorption columns;
- adsorbing pollutants on one or more activated carbon filters; and
- expelling purified flue gas thus obtained;
wherein the absorbent has a pH < 7 throughout the at least two packed columns.

According to an embodiment, the following cleaning steps are carried out and preferably in this order and in separate devices:
- mixing the different waste streams into a mixture;
- burning the mixture at 1100-1400°C where combustion gases are released;
- cooling the combustion gases via a steam boiler to 250-300°C;
- removing particles from the combustion gases in a two-field electrofilter;
- cooling the combustion gases in an economizer to 180-220°C;
- cooling and absorbing pollutants in a quench;
- absorbing pollutants in two or more packed columns, the absorbent being partially recirculated over the two or more packed columns, wherein the absorbent has a pH < 7 throughout the at least two packed columns;
- purifying the absorbent through an activated carbon filter and obtaining a hydrochloric acid solution.

Because the absorbent is partially recirculated over the two or more packed columns and initially has a pH < 7, a hydrochloric acid solution of high purity is obtained, suitable for use as a high-quality product. Many pollutants, such as salts and metals, have been removed from the system by the electrofilter. This leads to a higher purity of the hydrochloric acid solution.

In an embodiment, the quench, two or more packed columns; one or more activated carbon filters; one or more absorption columns; and the pumps, are separate devices. According to an embodiment, the flue gas originating from the combustion of chlorine-comprising material first flows through the quench, then through two or more packed columns, then through one or more absorption columns, and then through one or more activated carbon filters.

According to an embodiment, the flue gas flows through the two or more packed columns in which the flue gas comes into contact with a liquid with a pH lower than 7, then through the one or more absorption columns and then through the one or more activated carbon filters. The flue gas preferably only flows through the one or more activated carbon filters after it has flowed through the two or more packed columns and the one or more absorption columns, so that the activated carbon filters are less affected. The carbon can react with chlorine gas present in the flue gas and convert it to HCl. The carbon will slowly oxidize. Due to this placement of the one or more activated carbon filters, the exposure to chlorine gas will be lower, making the carbon less likely to break down and the particle size to decrease. This could otherwise lead to a greater pressure drop and ultimately to clogging.

According to an embodiment, at least the following cleaning steps are applied to the flue gas in separate devices and in this order: cooling and absorbing pollutants in a quench; absorbing pollutants in two or more packed columns; absorbing pollutants in one or more absorption columns; and adsorbing pollutants on one or more activated carbon filters; absorbing pollutants in one or more absorption columns; and expelling purified flue gas thus obtained, wherein an absorbent flows through the packed columns in the opposite direction of flow to the flue gas and consists of at least 90 wt% water upon entering one or more absorption columns. According to an embodiment, the absorbent entering the packed columns has a pH of less than 7, preferably less than 5, more preferably less than 1. Because the flue gas in the packed columns does not come into contact with an absorbent with a pH > 7, preferably > 5, the HCl is not neutralized. According to an embodiment, the concentration of HCl in the absorbent in the packed columns increases from 0.5-3 wt% to 20-35 wt%, preferably from 1-2 wt% to 20-30 wt%. According to an embodiment, the absorption of pollutants continues in three packed columns, a pump being provided for each column, suitable for recirculating the liquid over each column. As a result, a product with a high HCl concentration can be obtained and the concentration of HCl in the product can be properly controlled. Even with changing waste streams that are incinerated, a product can be obtained with a similar HCl concentration. Preferably the HCl concentration in the final product is 15-35 wt%, more preferably 18-27 wt%. Preferably, the flue gas stream and the liquid stream run in opposite directions. This results in a better adsorption of HCl in the liquid. According to an embodiment, the absorbent is recirculated over the packed columns until the HCl concentration in the absorbent is 10-35 wt%, preferably 20-30 wt%. According to an embodiment, there are three packed columns and the absorbent is recirculated over the packed column through which the flue gas flows last until the HCl concentration in the absorbent is 2-5 wt%. According to a further embodiment, the absorbent is recirculated over the packed column through which the flue gas flows second, until the HCl concentration in the absorbent is 12-20 wt%. According to a further embodiment, the absorbent is recirculated over the packed column through which the flue gas flows first until the HCl concentration in the absorbent reaches 20-30 wt%.

According to an embodiment, the absorbent coming out of the quench is partly injected back into the combustion chamber. As a result, less clean water needs to be injected. According to an embodiment, after the quench, the flue gas flows through a filter, preferably an electrofilter, whereby particles comprising pollutants such as metals and salts can be removed from the gas stream. In this way, fewer pollutants end up in the rest of the packed columns.

The packing material provides a pressure drop per theoretical stage of 0.1 - 2.0 mbar, preferably 0.3 - 1.0 mbar. At 70-80% flooding, the pressure drop is approximately 2 mbar/m. The minimum liquid load is approximately 0.2 m³/m²h. The maximum liquid load is at least 200 m³/m²h. Because packing material is used, the contact surface between liquid and gas is greatly increased, which improves the transfer of chlorine from the gas phase to the liquid phase. If no packing material were present, the columns would have to be at least 10 times larger to achieve the same removal of chlorine. In an embodiment, the packing material is structured packing. The removal of HCl from flue gas without the use of additives such as NaOH or Ca(OH)₂ requires a large exchange surface.

According to an embodiment, the packing material comprises at least 70 wt% of C-PVC (post-chlorinated PVC), polyvinylidene fluoride (PVDF) or a composition based on Bisphenol A and epoxy vinyl ester resin, preferably the packing material consists of PVDF or C-PVC. According to an embodiment, the packing material comprises plates, preferably these plates are located substantially vertically side by side in the column, more preferably the plates are corrugated, preferably diagonally corrugated, more preferably the plates are placed crossed over each other. This creates more turbulence. According to an embodiment, the plates are perforated. According to an embodiment, a reactor cross-section comprises 5-50 plates per m², preferably 10-25. In an embodiment, the device comprises three packed absorption columns, wherein the packing material comprises diagonally corrugated plates substantially vertically side by side in the column. In an embodiment, the packing material comprises diagonally corrugated sheets of polyvinylidene fluoride substantially vertically side by side in the column at a minimum distance of 1-15 cm between each other and a maximum distance of 10-30 cm between each other, preferably at a minimum distance of 1-10 cm between each other and a maximum distance of 12-30 cm between each other. The plates are preferably placed staggered next to each other. So, for example, the first plate is corrugated along the diagonals from bottom left to top right, and the next plate is corrugated from top left to bottom right. Because the plates are corrugated, a minimum and maximum distance between the plates can be measured by taking a cross-section of the column and constructing straight lines that pass through at least 2 bending points of a plate. Polyvinylidene fluoride is acid resistant and strong enough to be used as a packing material under these conditions. The temperature is high and the pH is low, usually less than 0. Because the flue gases are not scrubbed with bases, as in the methods known in the prior art, the packing material is exposed to much harsher conditions. According to an embodiment, the absorption of hydrochloric acid from the flue gas continues in three absorption columns with packing material, preferably wherein the packing material comprises diagonally corrugated plates, placed substantially vertically side by side in the column.

In what follows, the invention is described by means of non-limiting examples or figures illustrating the invention, which are not intended or should be interpreted as limiting the scope of the invention.

The invention will now be described in more detail with reference to the following non-limiting examples or figures.

### DESCRIPTION OF THE FIGURES

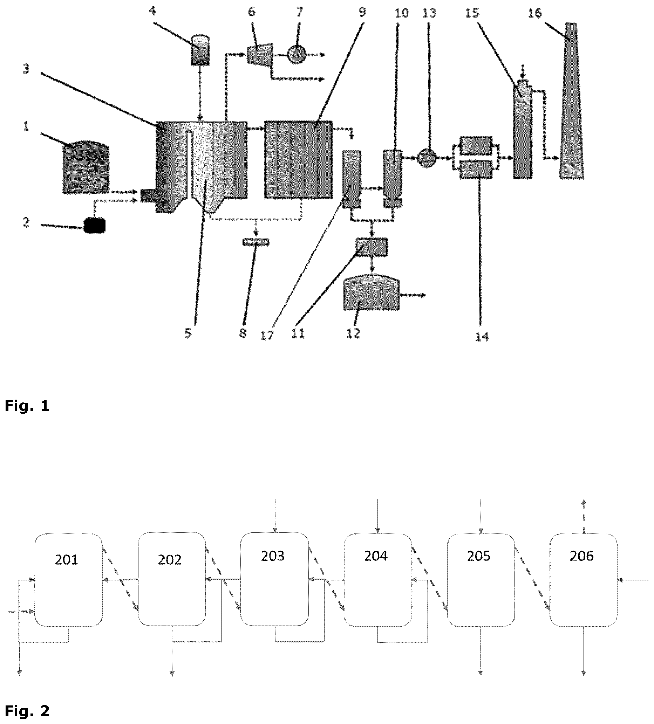

Figure 1 shows a schematic representation of the incineration process according to an embodiment of the present invention. The material to be burned is pumped from a liquid waste storage tank 1 into the combustion chamber with burner 3. The waste is burned in the combustion chamber. Natural gas can be added from a gas network 2 to heat up the combustion chamber and thus obtain the minimum legal combustion temperature. Urea is optionally added to the process from a urea tank 4. Urea will react with harmful NOX in the combustion gases. These harmful components are thus converted into N2. The hot combustion gases from the combustion chamber 3 go to the steam boiler 5. The steam boiler 5 functions as a heat exchanger in which the combustion gases are cooled with water that evaporates and becomes steam. The steam can be converted into electricity in the steam turbine 6 via a generator 7. Part of the steam can also be used elsewhere. The partially cooled combustion gas then passes through an electrofilter 9. Fly ash is captured in this filter and in the steam boiler and discharged to a fly ash container 8. The combustion gases then pass through a quench 17. The temperature of the combustion ashes drops in the quench 17 from about 200°C to 60-90°C. Hydrochloric acid is extracted from the further cooled combustion gas during a two-stage absorption 10. A liquid, mainly water, is sprayed in large quantities over the combustion gases. Hydrochloric acid and contaminants will then dissolve in the water. If the combustion gases contain a lot of chlorine, the concentration of HCl in this water can become high. To purify the HCl, the mixture is passed over an activated carbon filter 14. Activated carbon will adsorb other contaminants, especially organic ones, resulting in a purer HCl, which is stored in the HCl storage 12. Purified combustion gases then pass through a fan 13 and over an activated carbon filter 14. The activated carbon filter will remove contamination, especially organic, from the combustion gases. In addition, any chlorine gas (Cl2) still present is reduced to CI-. In a gas scrubber 15, the combustion gases are further purified before they are released into the atmosphere via a flue-gas stack 16.
- 1.: Liquid waste storage tank
- 2.: Natural gas tank
- 3.: Combustion chamber with burner
- 4.: Urea tank
- 5.: Steam boiler
- 6.: Steam turbine
- 7.: Generator
- 8.: Fly ash
- 9.: Electrofilter
- 10.: Two-stage absorption
- 11.: Activated carbon filter
- 12.: HCl storage
- 13.: Fan
- 14.: Activated carbon filter
- 15.: Gas scrubber
- 16.: Flue-gas stack
- 17: Quench

Figure 2 shows a device for purifying flue gas from the combustion of chlorine-comprising material, for example liquid waste material, according to an embodiment of the invention. The arrows with a dotted line indicate the flow direction of the flue gases. The arrows with a solid line indicate the flow direction of the absorbent.

The quench **201** receives flue gases from the electrofilter with a temperature of 200-250°C and will further cool them to a temperature of 50-95°C. The flue gases then pass through a demister to a first packed column **202,** then a second packed column **203** and third packed column **204,** where HCl is absorbed. An induced draught fan keeps the packed columns under negative pressure. When the flue gases exit the third packed column **204,** they are still at a temperature of 40-65°C. The flue gas is further purified in an absorption column **205.** The flue gases always enter the packed columns and absorption column at the bottom and will exit the columns at the top. The flue gases are then passed over one or more activated carbon filters **206.** Finally, the flue gas is released into the atmosphere through the flue-gas stack.

The absorbent will go through the process in reverse and can be replenished, returned or disposed of at any point in the system. The absorbent entering the activated carbon filter **206** is process water. It will dissolve residual traces of chlorine and have a relatively low HCl concentration. It is recirculated and part is returned to the incinerator. By sending it back to the incinerator, the chlorine can be discharged and the concentration of chlorine in the liquid in the activated carbon filter **206** remains sufficiently low. The absorption column **205** is provided with recirculation pumps which recirculate the absorbent over the absorption column **205.** Process water is added, and part of the recirculating absorbent is sent to the incinerator.

Process water is used as an absorbent in the third packed column **204.** Optionally, water with HCl is also added from parts of the process. The absorbent recirculates in part and flows to the second packed column **203** for the other part. The absorbent entering the second packed column has an HCl concentration of 2-5%. In the second packed column, the HCl concentration further increases to 12-20%. The absorbent is partly recirculated and partly flows on to the first packed column **202.** In the first column, the concentration of HCl in the absorbent increases further to 20-30%. Again, part of the absorbent is recirculated. Another part flows to the quench **201** and another part is further processed as a product. The absorbent in the packed columns enters at the top and is sprayed over the beds to provide a large exchange surface. Recirculation over these beds ensures a high concentration of HCl in the absorbent. In the quench **201** the HCl concentration in the absorbent rises further to 21-30%. Part of the absorbent is sent to the incinerator; another part is recirculated.
- 201: quench
- 202: first packed column
- 203: second packed column
- 204: third packed column
- 205: absorption columns
- 206: activated carbon filter

## Claims

1. Method for processing various liquid chlorine-comprising waste streams, wherein the method comprises the following steps:
mixing the different waste streams into a mixture;
burning the mixture at 1100-1400°C wherein combustion gases are released;
cooling the combustion gases via a steam boiler to 250-300°C;
removing particles, metals, salts and dust from the combustion gases in a two-field electrofilter;
cooling the combustion gases in an economizer to 180-220°C;
bringing the flue gases in contact with an absorbent in at least two packed absorption columns;
obtaining a hydrochloric acid solution;
**characterized in, that** the absorbent has a pH < 7 throughout the at least two packed columns.

2. Method according to claim 1, **characterized in, that** at least the following cleaning steps are carried out and preferably in this order and in separate devices:
mixing the different waste streams into a mixture;
burning the mixture at 1100-1400°C wherein combustion gases are released;
cooling the combustion gases via a steam boiler to 250-300°C;
removing particles from the combustion gases in a two-field electrofilter;
cooling the combustion gases in an economizer to 180-220°C;
cooling and absorbing pollutants in a quench;
absorbing pollutants in two or more packed columns, the absorbent being partially recirculated over the two or more packed columns, wherein the absorbent has a pH < 7 throughout the at least two packed columns;
purifying the absorbent through an activated carbon filter and obtaining a hydrochloric acid solution.

3. Method according to claim 2, **characterized in, that** the combustion gases and aqueous liquid pass in opposite directions through the at least two absorption columns.

4. Method according to claim 3, **characterized in, that** part of the absorbent is burned together with the mixture in the quench after use.

5. Method according to any of the preceding claims 2-4, **characterized in, that** the method comprises another step wherein the combustion gases, after the at least two absorption columns, pass over an activated carbon filter.

6. Method according to any of the preceding claims 1-5, **characterized in, that** at least part of the liquid leaving the last absorption column is purified via an activated carbon filter.

7. Method according to claim 6, **characterized in, that** the hydrochloric acid solution after purification over an activated carbon filter has a concentration of 20-29%.

8. Method according to any of the preceding claims 1-7, **characterized in, that** the mixture contains 500-700 g chlorine per kg.

9. Method according to any of the preceding claims 1-8, **characterized in, that** urea is being added.

10. Method according to any of the preceding claims 1-9, **characterized in, that** more steam is generated than waste is burned, expressed in tons/hour.

11. Device for processing various liquid chlorine-comprising waste streams, comprising: storage tanks; a furnace capable of receiving various waste streams from the storage tanks; a combustion chamber suitable for the combustion at 1100-1400°C of methane and various waste streams wherein combustion gases are released; a steam boiler, suitable for cooling the combustion gases to 250-300°C; a two-field electrofilter suitable for removing particles from the combustion gases; an economizer, suitable for cooling combustion gases to 180-220°C; in at least two packed absorption columns in which flue gases are brought into contact with an absorbent; **characterized in, that** the absorbent has a pH < 7 throughout the at least two packed columns.

12. Device according to claim 11, **characterized in, that** the device comprises three packed absorption columns, wherein the packing material comprises diagonally corrugated plates substantially vertically side by side in the column.

13. Device according to claim 11 or 12, **characterized in, that** the device further comprises an activated carbon filter configured for purifying the hydrochloric acid solution.

14. Device according to any of the preceding claims 11-13, **characterized in, that** the device further comprises a steam turbine where electricity is generated.

15. Device according to any of the preceding claims 11-14, **characterized in, that** the device is suitable for carrying out the method according to any of the preceding claims 1-10.

## Patentansprüche

1. Verfahren zum Verarbeiten verschiedener flüssiger chlorhaltiger Abfallströme, wobei das Verfahren die folgenden Schritte umfasst:
Mischen der verschiedenen Abfallströme zu einer Mischung,
Verbrennen der Mischung bei 1100 bis 1400 °C, wobei Verbrennungsgase freigesetzt werden,
Abkühlen der Verbrennungsgase mittels eines Dampfkessel auf 250 bis 300 °C,
Entfernen von Partikeln, Metallen, Salzen und Staub aus den Verbrennungsgasen in einem Zwei-Felder-Elektrofilter,
Abkühlen der Verbrennungsgase in einem Vorwärmer auf 180 bis 220 °C,
In-Kontakt-Bringen der Abgase mit einem Absorbens in mindestens zwei gepackten Absorptionskolonnen,
Erzielen einer Salzsäurelösung
**dadurch gekennzeichnet, dass** das Absorbens überall in den mindestens zwei gepackten Kolonnen einen pH-Wert < 7 aufweist.

2. Verfahren nach Anspruch 1, **dadurch gekennzeichnet, dass** mindestens die folgenden Reinigungsschritte ausgeführt werden und vorzugsweise in dieser Reihenfolge sowie in separaten Vorrichtungen:
Mischen der verschiedenen Abfallströme zu einer Mischung,
Verbrennen der Mischung bei 1100 bis 1400 °C, wobei Verbrennungsgase freigesetzt werden,
Abkühlen der Verbrennungsgase mittels eines Dampfkessel auf 250 bis 300 °C,
Entfernen von Partikeln aus den Verbrennungsgasen in einem Zwei-Felder-Elektrofilter,
Abkühlen der Verbrennungsgase in einem Vorwärmer auf 180 bis 220 °C,
Abkühlen und Absorbieren von Verunreinigungen in einem Quench,
Absorbieren von Verunreinigungen in zwei oder mehr gepackten Kolonnen, wobei das Absorbens teilweise über die zwei oder mehr gepackten Kolonnen rückgeführt wird, wobei das Absorbens überall in den mindestens zwei gepackten Kolonnen einen pH-Wert < 7 aufweist,
Aufreinigen des Absorbens durch einen Aktivkohlefilter und Erzielen einer Salzsäurelösung.

3. Verfahren nach Anspruch 2, **dadurch gekennzeichnet, dass** die Verbrennungsgase und die wässrige Lösung in entgegengesetzte Richtung durch die mindestens zwei Absorptionskolonnen laufen.

4. Verfahren nach Anspruch 3, **dadurch gekennzeichnet, dass** ein Teil des Absorbens nach der Verwendung zusammen mit der Mischung in dem Quenche verbrannt wird.

5. Verfahren nach einem der vorhergehenden Ansprüche 2 bis 4, **dadurch gekennzeichnet, dass** das Verfahren einen weiteren Schritt umfasst, wobei die Verbrennungsgase nach den mindestens zwei Absorptionskolonnen über einen Aktivkohlefilter laufen.

6. Verfahren nach einem der vorhergehenden Ansprüche 1 bis 5, **dadurch gekennzeichnet, dass** mindestens ein Teil der Flüssigkeit, der die letzte Absorptionskolonne verlässt, mittels eines Aktivkohlefilters aufgereinigt wird.

7. Verfahren nach Anspruch 6, **dadurch gekennzeichnet, dass** die Salzsäurelösung nach dem Aufreinigen über einem Aktivkohlefilter eine Konzentration von 20 bis 29 % aufweist.

8. Verfahren nach einem der vorhergehenden Ansprüche 1 bis 7, **dadurch gekennzeichnet, dass** die Mischung 500 bis 700 g Chlor pro kg enthält.

9. Verfahren nach einem der vorhergehenden Ansprüche 1 bis 8, **dadurch gekennzeichnet, dass** Harnstoff zugesetzt wird.

10. Verfahren nach einem der vorhergehenden Ansprüche 1 bis 9, **dadurch gekennzeichnet, dass** mehr Dampf erzeugt als Abfall verbrannt wird, ausgedrückt in Tonnen/Stunde.

11. Vorrichtung zum Verarbeiten verschiedener flüssiger chlorhaltiger Abfallströme, Folgendes umfassend: Speichertanks, einen Brennofen, der in der Lage ist, verschiedene Abfallströme von den Speichertanks aufzunehmen, eine Brennkammer, die für die Verbrennung von Methan und verschiedenen Abfallströmen bei 1100 bis 1400 °C geeignet ist, wobei Verbrennungsgase freigesetzt werden, einen Dampfkessel, der zum Abkühlen der Verbrennungsgase auf 250 bis 300 °C geeignet ist, einen Zwei-Felder-Elektrofilter, der zum Entfernen von Partikeln aus den Verbrennungsgasen geeignet ist, einen Vorwärmer, der zum Abkühlen der Verbrennungsgase auf 180 bis 220 °C geeignet ist, mindestens zwei gepackte Absorptionskolonnen, in denen Abgase in Kontakt mit einem Absorbens gebracht werden, **dadurch gekennzeichnet, dass** das Absorbens überall in den mindestens zwei gepackten Kolonnen einen pH-Wert < 7 aufweist.

12. Vorrichtung nach Anspruch 11, **dadurch gekennzeichnet, dass** die Vorrichtung drei gepackte Absorptionskolonnen umfasst, wobei das Packmaterial diagonal gewellte Platten im Wesentlichen vertikal nebeneinander in der Kolonne umfasst.

13. Vorrichtung nach Anspruch 11 oder 12, **dadurch gekennzeichnet, dass** die Vorrichtung ferner einen Aktivkohlefilter umfasst, der zum Aufreinigen der Salzsäurelösung gestaltet ist.

14. Vorrichtung nach einem der vorhergehenden Ansprüche 11 bis 13, **dadurch gekennzeichnet, dass** die Vorrichtung ferner eine Dampfturbine umfasst, in der Elektrizität erzeugt wird.

15. Vorrichtung nach einem der vorhergehenden Ansprüche 11 bis 14, **dadurch gekennzeichnet, dass** die Vorrichtung geeignet ist, das Verfahren nach einem der vorhergehenden Ansprüche 1 bis 10 auszuführen.

## Revendications

1. Procédé de traitement de divers courants de déchets liquides comprenant du chlore, dans lequel le procédé comprend les étapes suivantes :
mélange des différents courants de déchets en un mélange ;
brûlage du mélange à 1 100 à 1 400 °C dans lequel des gaz de combustion sont libérés ;
refroidissement des gaz de combustion par l'intermédiaire d'une chaudière à vapeur à 250 à 300 °C ;
élimination de particules, métaux, sels et poussières des gaz de combustion dans un électrofiltre à deux champs ;
refroidissement des gaz de combustion dans un économiseur à 180 à 220 °C ;
fait d'amener les gaz de carneau en contact avec un absorbant dans au moins deux colonnes d'absorption à garnissage ;
obtention d'une solution d'acide chlorhydrique ;
**caractérisé en ce que** l'absorbant a un pH < 7 dans l'ensemble des au moins deux colonnes à garnissage.

2. Procédé selon la revendication 1, **caractérisé en ce qu'**au moins les étapes de nettoyage suivantes sont réalisées et de préférence dans cet ordre et dans des dispositifs séparés :
mélange des différents courants de déchets en un mélange ;
brûlage du mélange à 1 100 à 1 400 °C dans lequel des gaz de combustion sont libérés ;
refroidissement des gaz de combustion par l'intermédiaire d'une chaudière à vapeur à 250 à 300 °C ;
élimination de particules des gaz de combustion dans un électrofiltre à deux champs ;
refroidissement des gaz de combustion dans un économiseur à 180 à 220 °C ;
refroidissement et absorption de polluants dans une trempe ;
absorption de polluants dans deux colonnes à garnissage ou plus, l'absorbant étant partiellement remis en circulation sur les deux colonnes à garnissage ou plus, dans lequel l'absorbant a un pH < 7 dans l'ensemble des au moins deux colonnes à garnissage ;
purification de l'absorbant à travers un filtre à charbon actif et obtention d'une solution d'acide chlorhydrique.

3. Procédé selon la revendication 2, **caractérisé en ce que** les gaz de combustion et le liquide aqueux passent dans des directions opposées à travers les au moins deux colonnes d'absorption.

4. Procédé selon la revendication 3, **caractérisé en ce qu'**une partie de l'absorbant est brûlée conjointement avec le mélange dans la trempe après utilisation.

5. Procédé selon l'une quelconque des revendications 2 à 4 précédentes, **caractérisé en ce que** le procédé comprend une autre étape, dans lequel les gaz de combustion, après les au moins deux colonnes d'absorption, passent sur un filtre à charbon actif.

6. Procédé selon l'une quelconque des revendications 1 à 5 précédentes, **caractérisé en ce qu'**au moins une partie du liquide quittant la dernière colonne d'absorption est purifiée par l'intermédiaire d'un filtre à charbon actif.

7. Procédé selon la revendication 6, **caractérisé en ce que** la solution d'acide chlorhydrique après purification sur un filtre à charbon actif a une concentration de 20 à 29 %.

8. Procédé selon l'une quelconque des revendications 1 à 7 précédentes, **caractérisé en ce que** le mélange contient 500 à 700 g de chlore par kg.

9. Procédé selon l'une quelconque des revendications 1 à 8 précédentes, **caractérisé en ce que** de l'urée est ajoutée.

10. Procédé selon l'une quelconque des revendications 1 à 9 précédentes, **caractérisé en ce que** plus de vapeur est générée que de déchets ne sont brûlés, exprimé en tonnes/heure.

11. Dispositif de traitement de divers courants de déchets liquides comprenant du chlore, comprenant : des réservoirs de stockage ; un four capable de recevoir divers courants de déchets à partir des réservoirs de stockage ; une chambre de combustion appropriée pour la combustion à 1 100 à 1 400 °C de méthane et divers courants de déchets, dans lequel des gaz de combustion sont libérés ; une chaudière à vapeur, appropriée pour le refroidissement des gaz de combustion à 250 à 300 °C ; un électrofiltre à deux champs approprié pour l'élimination de particules des gaz de combustion ; un économiseur, approprié pour le refroidissement de gaz de combustion à 180 à 220 °C ; dans au moins deux colonnes d'absorption à garnissage dans lesquelles des gaz de carneau sont amenés en contact avec un absorbant ; **caractérisé en ce que** l'absorbant a un pH < 7 dans l'ensemble des au moins deux colonnes à garnissage.

12. Dispositif selon la revendication 11, **caractérisé en ce que** le dispositif comprend trois colonnes d'absorption à garnissage, dans lequel le matériau de garnissage comprend des plaques ondulées en diagonale sensiblement verticalement côte à côte dans la colonne.

13. Dispositif selon la revendication 11 ou 12, **caractérisé en ce que** le dispositif comprend en outre un filtre à charbon actif configuré pour purifier la solution d'acide chlorhydrique.

14. Dispositif selon l'une quelconque des revendications 11 à 13 précédentes, **caractérisé en ce que** le dispositif comprend en outre une turbine à vapeur où de l'électricité est générée.

15. Dispositif selon l'une quelconque des revendications 11 à 14 précédentes, **caractérisé en ce que** le dispositif est approprié pour réaliser le procédé selon l'une quelconque des revendications 1 à 10 précédentes.
